# EUROPÄISCHE PATENTANMELDUNG

(11) **EP 1 078 683 A1**
(43) Veröffentlichungstag der Anmeldung: **28.02.2001**
(21) Anmeldenummer: 00117878.9
(22) Anmeldetag: 19.08.2000
(51) Int. Cl.: B01J 8/06, C01C 3/02

(54) **Bodenbrenner für Kammerofen mit Reaktionsrohren, diesen Brenner enthaltender Kammerofen und seine Verwendung**

(30) Priorität: 21.08.1999 DE 19939731
(71) Anmelder: Franke, Stefan, 61118 Bad Vilbel (DE)
(72) Erfinder: Die Erfindernennung liegt noch nicht vor

(57) **Zusammenfassung**

Die Verwendung des erfindungsgemäßen Bodenbrenners in Kammeröfen mit darin vertikal angeordneten Reaktionsrohren führt zu einer gleichmäßigeren horizontalen Temperaturverteilung und damit zu höheren Ausbeuten als die Verwendung von seitlich angeordneten Flächenbrennern. Der Bodenbrenner (100) umfasst einen Brennerstein (106) und darunter einen Isolierstein (107) mit durchgehenden Bohrungen für die Reaktionsrohre (112) und Brenngasdüsen (114), die eine Brenngaslanze (115) und einen Düsendrallkörper (116) umfassen. Unterhalb des Isoliersteins befindet sich ein Luftgehänge (108) zur Versorgung der im Brennerstein endenden Düsendrallkörper mit Luft und darunter ein Brenngasgehäuse (109) zur Versorgung der Brenngaslanzen mit jeweils entsprechenden Bohrungen für die Reaktionsrohre und Brenngaslanzen.

Gegenstand sind auch ein gattungsgemäßer Kammerofen mit dem Bodenbrenner sowie dessen Verwendung zur Durchführung endothermer Gasreaktionen, wie des BMA-Verfahrens zur Herstellung von Cyanwasserstoff.

## Beschreibung

Die Erfindung betrifft einen Brenner mit mehreren Brenngasdüsen für einen Kammerofen mit mindestens einem, vorzugsweise mehreren parallel darin angeordneten Reaktionsrohren, in welchen endotherme Gasreaktionen durchgeführt werden können, wobei der Brenner und die Rohre derart angeordnet sind, daß die Flammen im wesentlichen parallel zu den Rohren laufen. Da der Brenner üblicherweise bodenseitig angeordnet ist und die Reaktionsrohre durch diesen Boden reichen, wird der Brenner nachfolgend als 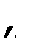 Bodenbrenner" bezeichnet. Ein weiterer Gegenstand richtet sich auf einen Kammerofen mit durch den Boden und die Decke der Kammer reichenden Reaktionsrohren und einem erfindungsgemäßen Bodenbrenner. Gegenstand ist ferner die Verwendung des Kammerofens für endotherme Gasreaktionen, insbesondere zur Durchführung des BMA-Verfahrens zur Herstellung von Blausäure (Cyanwasserstoff) aus Methan und Ammoniak.

Endotherme Gasreaktionen, wie das BMA-Verfahren, lassen sich in Reaktionsrohren, welche in einer Brennkammer angeordnet sind, und mittels eines oder mehrerer Brenner auf die erforderliche Reaktionstemperatur gebracht werden, durchführen. Üblicherweise sind die Reaktionsrohre bündelförmig angeordnet und frei dehnbar fixiert und reichen durch den Boden und die Decke der Brennkammer. Wie aus der DE-PS 10 41 476 werden die in einer Brennkammer aufgehängten Reaktionsrohre aus einem keramischen Material mittels in der Seitenwand der Brennkammer angeordneten Flachbrennern beheizt. Die Anordnung der Brenner an einer oder mehrerer Seiten der Brennkammer mit einem senkrecht in dieser angeordneten Bündel aus Reaktionsrohren wurde, wie die DE-PS 33 09 394 lehrt, auch in späteren Jahren beibehalten.

Ein großer Nachteil der seitlichen Beheizung der Reaktionsrohre ist die ungleichmäßige Verteilung der Wärme, welche durch das Rohrbündel ausströmende Rauchgase und durch Strahlung übertragen wird. Gerade die aufgrund von Abschirmeffekten von Reaktionsrohren bei einer Seitenbeheizung mit Flachbrennern auftretende Ungleichverteilung in horizontaler Richtung führt zu einer Ungleichverteilung der Temperatur in den einzelnen Reaktionsrohren, was Ausbeuteverluste zur Folge hat. Die brennernahen Reaktionsrohre weisen dabei eine zu hohe Reaktionstemperatur und brennerferne Rohre eine zu niedrige Temperatur auf. Die Temperaturunterschiede haben zur Folge, dass in einigen Reaktionsrohren nicht die optimale Reaktionstemperatur herrscht. Dadurch steigt der Anteil an Nebenreaktionen an, was die Reaktionsausbeute vermindert. Durch Nebenreaktionen können zudem Feststoffe gebildet werden, wodurch es zum Verstopfen und somit zum Ausfall der Reaktionsrohre kämmen kann.

Gemäß DE-PS 884 348 sowie der internationalen Patentanmeldung PCT/EP 99/00228 (= WO 98/.....) ist es möglich, die in einem Kammerofen aufgehängten Reaktionsrohre mittels im wesentlichen parallel zu diesen Rohren strömenden Rauchgasen zu beheizen, indem der Kammerofen in eine Brennkammer und eine Heizkammer aufgeteilt ist, der Brenner in der Brennkammer und die Reaktionsrohre in der Heizkammer angeordnet sind und die Verbrennungsgase mittels einer Kombination und einem Brennerfreistrahl und einem Diffusor umgewälzt werden. Das horizontale Temperaturprofil ist in einem derartigen Kammerofen zwar verbessert, jedoch werden die Investitionen durch das Erfordernis einer Brenn- und einer Heizkammer erhöht.

Gemäß DE-PS 10 43 291 werden endotherme Gasreaktionen in einer Apparatur durchgeführt, welche eine Heizkammer mit darin angeordneten Reaktionsrohren, eine aufgesetzte Kühl- und Ableitungskammer und eine Gaszuleitung- und -verteilungskammer umfaßt; die Reaktionsrohre sind aus einem Material hergestellt, welches eine Oberflächenverbrennung ermöglicht. Die Gaszuleitungs- und -verteilungskammer umfaßt Kanäle für das Brenngasgemisch zu im Heizkammerboden angeordneten Düsen. Die in der Heizkammer entstehenden Verbrennungsgase werden durch in der Gasverteilungskammer angeordnete Kanäle geleitet und dienen so der Vorwärmung der Heiz- und/oder Reaktionsgase. Nachteilig an diesem Ofen ist das Erfordernis von eine Oberflächenverbrennung ermöglichenden Reaktionsrohren. Ein weiterer Nachteil besteht darin, daß Brenngas und Luft bereits vor Eintritt in den Ofen gemischt werden, so daß das Gasgemisch aus Sicherheitsgründen nur in beschränktem Umfang vor der Zündung aufgeheizt werden kann. Dieser Kammerofen eignet sich daher nicht für einen wirtschaftlichen großtechnischen Einsatz zur Durchführung endothermer, bei hoher Temperatur durchgeführter Reaktionen.

Zum flächigen Beheizen von Kammeröfen sind unterschiedliche Arten von Flächenbrennern bekannt. Gemäß einer üblichen Ausführungsform (Dubbel-Taschenbuch für Maschinenbau, 17. Auflage) werden Luft und ein Brenngas getrennt voneinander in einen Luft- bzw. Gasraum des Brennergehäuses geführt. Von diesen getrennten Räumen führen schräge Taschen abwechselnd in den Querschnitt des Brenners. Die schräg zulaufenden und gegeneinander angeordneten Querschnitte der Taschen bewirken ein Ineinanderblasen von Brenngas und Luft, und das Gas-Luft-Gemisch verbrennt dann in der üblicherweise ausgemauerten Brennkammer. Eine alternative Ausführungsform ist ein nach dem Diffusionsprinzip arbeitender Wirbelstrahlbrenner (Firmenschrift der Fa. Koppers-Wistra-Ofenbau GmbH, Düsseldorf): Dieser Brenner umfaßt einen Brennerstein mit Bohrungen für mehrere Brennerdüsen, eine Luftverteilungskammer und eine Gasverteilungskammer, wobei Brenngaslanzen durch die Luftverteilungskammer bis in die Bohrungen hineinreichen und in diesen einen Ringspalt zum Ansaugen von Luft zur Düsenspitze verbleibt. Obgleich ein solcher Brenner bei seitlicher Positionierung in einem Kammerofen mit darin aufgehängten Reaktionsrohren zum Beheizen verwendet werden kann, ist es wegen der durch den Boden gehenden Reaktionsrohren nicht möglich, diesen Brenner bodenseitig anzuordnen.

Aufgabe der Erfindung ist es demgemäß, einen Brenner für einen Kammerofen mit durch den Boden reichenden Reaktionsrohren aufzuzeigen, dessen Flammen im wesentlichen parallel zu den Rohren laufen und einen sicheren und wirtschaftlichen Betrieb ermöglichen. Eine weitere Aufgabe ist es, einen Brenner zu schaffen, womit die Reaktionsrohre gleichmäßiger beheizt werden können, als dies bei seitlicher Anordnung eines Brenners möglich ist. Eine weitere Aufgabe besteht darin, einen Kammerofen mit durch den Boden reichenden Reaktionsrohren aufzuzeigen, wobei die Verbrennungsgase im wesentlichen parallel zu den Rohren strömen und der Brenner in derselben Kammer angeordnet sein soll, in welcher sich auf die Reaktionsrohre befinden. Eine weitere Aufgabe ist es, die Ausbeute von endothermen Gasreaktionen durch Verwendung eines Kammerofens mit durch den Boden und die Decke reichenden Reaktionsrohren durch Vergleichmäßigung des horizontalen Temperaturprofils durch Einsatz eines Bodenbrenners zu verbessern. Weitere Aufgaben und deren Lösung ergeben sich aus der nachfolgenden Beschreibung des Bodenbrenners, des Kammerofens und dessen Verwendung.

Gefunden wurde ein Bodenbrenner für einen Kammerofen mit mindestens einem, insbesondere einem Bündel von durch den Boden reichenden Reaktionsrohren, umfassend einen den Kammerboden bildenden Brennerstein (106), einen darunter angeordneten Isolierstein (107), wobei senkrechte Bohrungen (111 und 113) für die Reaktionsrohre (112) und mindestens eine, insbesondere eine die Zahl der Reaktionsrohre übersteigende Zahl Brenngasdüsen (114) durch den Brenn- und Isolierstein reichen, Brenngasdüsen, welche einen Düsendrallkörper (116) und eine Brenngaslanze (115) umfassen und wobei zwischen den Brenngaslanzen und den sie umgebenden Stein ein Ringstalt (119) verbleibt, ein unterhalb des Isoliersteins angeordnetes, mit einer Vorrichtung zur Luftzufuhr ausgestattetes Luftgehäuse (108), durch welches die Reaktionsrohre und Brenngaslanzen reichen und welches deckenseitig mit den Ringspalten in Verbindung steht, ein unterhalb des Luftgehäuses angeordnetes mit einer Vorrichtung zur Brenngaszufuhr ausgestattetes Brenngasgehäuse (109), durch welches die Reaktionsrohre reichen und welches mit den Brenngaslanzen in Verbindung steht und ein Dichtungselement (110) zur Abdichtung der durch den Boden des Luftgehäuses und die Decke des Gasgehäuses reichenden Reaktionsrohrdurchführungen. Die Unteransprüche richten sich auf bevorzugte Ausführungsformen des Bodenbrenners. Obgleich hier und nachfolgend stets die Rede von einem Bodenbrenner ist und diese Ausführungsform für die Praxis die größte Bedeutung hat, ist es auch möglich, den 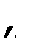 Bodenbrenner" in einer Seitenwand des Kammerofens anzuordnen, wenn die Reaktionsrohre schräg ansteigend oder horizontal angeordnet sind und durch die den Brenner aufnehmende Seite sowie die gegenüberliegende Seite reichen.

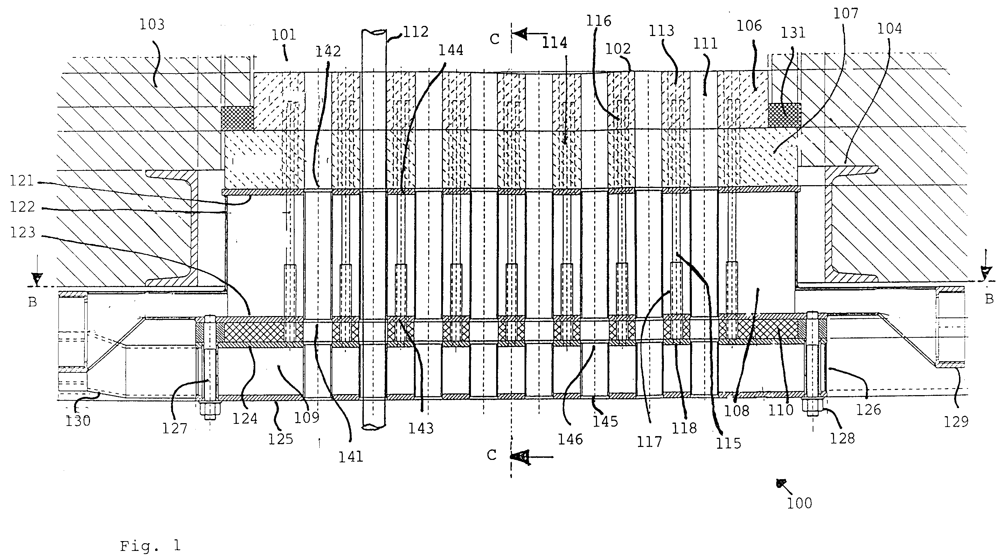

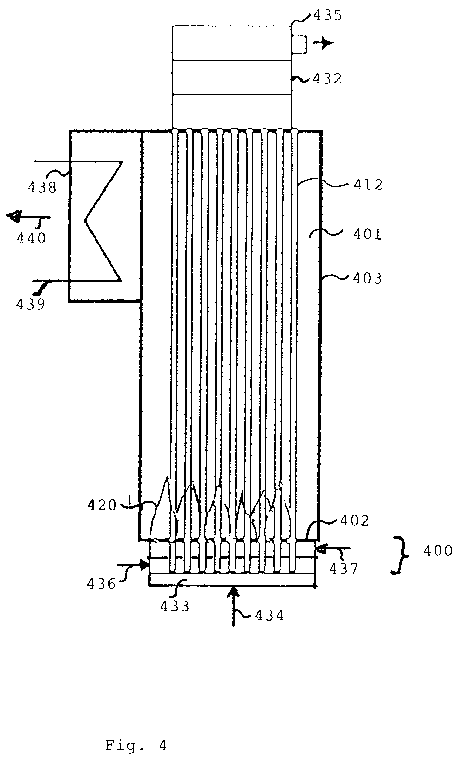

Anhand der Figuren 1/4 bis 3/4, welche sich auf eine bevorzugte Ausführungsform des Bodenbrenners richten, wird dieser näher erläutert. Anhand der Figur 4/4 wird der einen erfindungsgemäßen Bodenbrenner umfassende Kammerofen erläutert. Die Bezugsziffern der Figuren 1 bis 4 sind äquivalent; lediglich die erste Ziffer weist auf die Nummer der Figur hin.
Figur 1/4 zeigt einen senkrechten Schnitt in der Ebene A-A durch den erfindungsgemäßen Bodenbrenner, welcher gleichzeitig den Boden eines Kammerofens bildet.
Figur 2/4 zeigt einen senkrechten Schnitt durch die Schmalseite des Bodenbrenners in der Ebene C-C (Positionierung siehe Figur 1/4).
Figur 3/4 zeigt einen horizontalen Schnitt durch den Bodenbrenner in der Ebene B-B (Positionierung siehe Figur 1/4).
Figur 4/4 zeigt in schematischer Form einen Längsschnitt durch einen erfindungsgemäßen Kammerofen mit durch den Boden und die Decke der Brennkammer reichenden Reaktionsrohren.

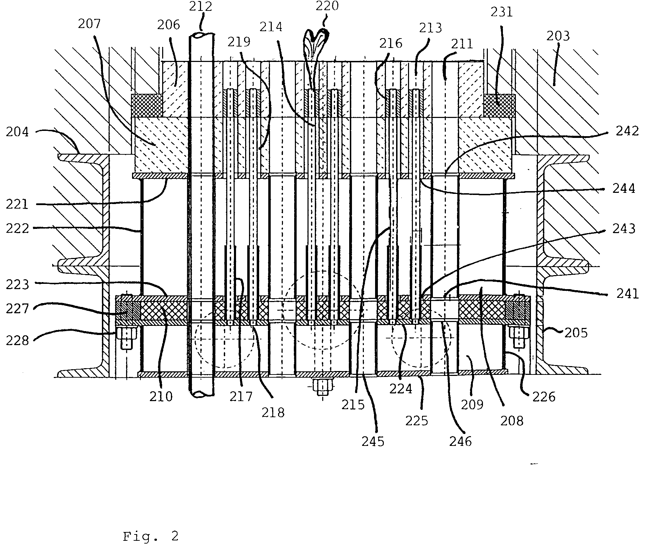

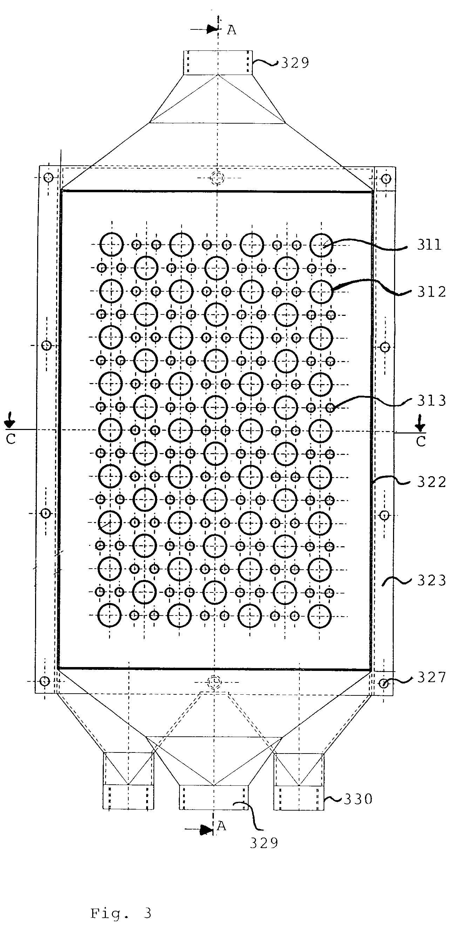

Figur 1/4 und Figur 2/4 zeigen den Bodenbrenner in eingebautem Zustand, wobei die Brennkammer nur in Bodennähe dargestellt ist, nicht gezeigt werden auch jene Vorrichtungen, die zur Versorgung der Reaktionsrohre mit den umzusetzenden Gasen erforderlich sind. Der Brennerstein (106) schließt die Brennkammer (101) nach unten ab und bildet gleichzeitig den Brennkammerboden (102). Zu beiden Seiten schließen sich Brennkammerwände (103) an, welche mittels Ofenträgern (104, in Fig. 2/4 204 und 205) getragen werden. Der Brennerstein (106) isoliert gemeinsam mit dem Isolierstein (107) das ein Luftgehäuse (108) und ein Brenngasgehäuse (109) umfassende Bodenbrennergehäuse gegen den Brennraum ab. Der Isolierstein (107) befindet sich zwischen dem Brennerstein und dem Luftgehäuse. Brennerstein und Isolierstein sind mit durchgehenden Bohrungen (111 und 113, entsprechend 311 und 313 in Fig. 3/4) zur Aufnahme der Reaktionsrohre und der Brenngasdüsen versehen. Die Brenngasdüsen (114) sind innerhalb der hierfür vorgesehenen Bohrungen angeordnet. Die Austrittsöffnung der Düse befindet sich innerhalb der Bohrung des Brennersteins. Oberhalb dieser Austrittsöffnung kann die Bohrung zylindrisch oder vorzugsweise leicht konisch erweitert ausgebildet sein. Die Flamme einer jeden Brenngasdüse tritt somit aus dem Brennerstein aus, und bei einer Vielzahl von Brenngasdüsen bildet sich ein Flammenteppich. Zu Anschauungszwecken zeigt Figur 2/4 in einem Fall die Flamme (220). Der Brennerstein ist aus einem feuerfesten Material, welches bis zur gewünschten Anwendungstemperatur ausreichend temperaturwechselbeständig ist, gefertigt; für den genannten Zweck sind Steine mit einer Temperaturbelastbarkeit im Bereich um 1500 °C und in Spezialfällen auch bis 2000 °C bekannt.

Unterhalb der Kombination aus Brennerstein und Isolierstein ist ein Luftgehäuse (108) angeordnet. Das beispielsweise aus Gußeisen oder geschweißten Blechen angefertigte Luftgehäuse (108) umfaßt einen Boden (123), eine Seitenwand (122), eine Decke (121) sowie einen oder mehrere Stutzen (129) zur Versorgung der Kammer mit Luft. Das Luftgehäuse ist mit decken- und bodenseitigen Reaktionsrohrdurchführungen (241 und 242) sowie mit decken- und bodenseitigen Durchführungen (243 und 244) für die Brenngaslanzen (115) beziehungsweise Stützhülsen (117) hierfür ausgestattet. Der Durchmesser der deckenseitigen Bohrungen für die Brenngaslanzen ist größer als der äußere Durchmesser derselben, so daß ein Ringspalt (219) verbleibt. Die Spaltbreite kann konstant sein oder von unten nach oben abnehmen. Dieser Ringspalt (219) setzt sich innerhalb des Isoliersteins und gegebenenfalls eines Teil des Brennersteins bis zur Unterseite des eigentlichen Düsendrallkörpers (116) fort. Das Luftgehäuse leitet die Verbrennungsluft von Lufteintritt (Stutzen 129) über den genannten Ringspalt (119) in der Luftgehäusedecke sowie im Isolierstein bis zum Düsendrallkörper der Brennerdüse im Brennerstein.

Unterhalb des Luftgehäuses (108) ist das Brenngasgehäuse (109), welches eine Decke (124), einen Boden (125), Seitenwände (126) und einen Brenngaszufuhrstutzen (130) umfaßt. Die Dicke des Gasgehäuses und der Boden des Luftgehäuses können im Prinzip in Form eines einzigen entsprechend durchbohrten Blechs gefertigt sein, zweckmäßig ist es jedoch, diese Elemente getrennt auszubilden und zwischen dem Luftgehäuse und Gasgehäuse ein Dichtungselement (110), zweckmäßigerweise als Isoliermatte ausgebildet, anzuordnen. Das Gasgehäuse enthält wiederum boden- und deckenseitige Bohrungen (145 und 146) zur Durchführung der Reaktionsrohre (112). Figur 1 und 2 enthalten zu Anschauungszwecken ein einziges Reaktionsrohr. Deckenseitig enthält das Gasgehäuse zusätzlich Bohrungen (118) für die Brenngaslanzen (115). Sofern die Brenngaslanzen im unteren Teil zu Stützzwecken von Stützhülzen (117) umgeben sind, werden diese zweckmäßigerweise an der Decke fixiert. Das Brenngasgehäuse verteilt das vom Eintrittstutzen (130) kommende Brenngas auf die Brenngaslanzen. In der in den Figuren 1/4 und 2/4 dargestellten bevorzugten Ausführungsform des Dichtungselements (110) in Form einer Isoliermatte umschließt diese die durch die Reaktionsrohrdurchführungen (141 und 145) geführten Reaktionsrohre und dichtet somit den Ringspalt um diese Reaktionsrohre gegen Ansaugen von Falschluft ab. In der in Figur 1/4 und 2/4 dargestellten Ausführungsform sind das Luftgehäuse und Gasgehäuse miteinander verschraubt (Schrauben 127 und Muttern 128).

Die Brenngasdüse umfaßt im wesentlichen die Brennlanze (115) und den eigentlichen Düsendrallkörper (116). Der Düsendrallkörper umfaßt Kanäle zur Zufuhr von Luft aus dem Ringspalt (119). Gemäß einer Ausführungsform verläuft achsial im Düsendrallkörper die Brenngaslanze, an deren oberem Ende eine oder mehrere Brenngasaustrittsöffnungen seitlich angeordnet sind. Die im Drallkörper verdrallte Luft trifft am Ende des Drallkörpers mit dem Gas aus der Brenngaslanze zusammen und vermischt sich mit diesem. Durch den Drallwinkel der Luftkanäle im Drallkörper und die Größe der Brenngasaustrittsöffnungen am Ende der Gaslanze lassen sich das Flammenbild und die Gasverteilung in der Brenngaskammer etwas variieren.

Der eigentliche Brenner kann sowohl als Diffusions- als auch als Vormischbrenner für verschiedene gasförmige Brennstoffe ausgebildet sein. In der in den Figuren 1/4 und 2/4 dargestellten bevorzugten Ausführungsform gelangt das Brenngas über die Brenngaslanze an die Austrittsöffnung dieser im Brennerstein. Die Verbrennungsluft gelangt über den Ringspalt (119) vom Luftgehäuse zum Düsendrallkörper (116). Im Drallkörper erfolgt die Verdrallung der Luft, die dann am oberen Ende des Düsendrallkörpers mit dem Gas aus der Brenngaslanze zusammentrifft und sich vermischt. Dieses Gasgemisch verbrennt nun und bildet eine Flamme aus dem Brennerstein heraus. Diese Flamme bzw. der aus mehreren Düsen gebildete Flammenteppich erhitzt die Reaktionsrohre, in denen die gewünschte endotherme Reaktion abläuft. Aufgrund der Anordnung der Reaktionsrohre in Bezug auf die Brenngasdüsen laufen die Flammen sowie die Verbrennungsgase weitgehend parallel zu den Reaktionsrohren, so daß im wesentlichen über den gesamten horizontalen Querschnitt einer Brennkammer ein gleichmäßiges Temperaturprofil erzielt wird.

Der Bodenbrenner enthält Durchführungen für mindestens ein Reaktionsrohr, vorzugsweise aber ein ganzes Bündel von Reaktionsrohren sowie mindestens eine Brenngasdüse, vorzugsweise aber eine Vielzahl von Brenngasdüsen. Die Reaktionsrohrdurchführung und Brenngasdüsen werden zweckmäßigerweise in gleichmäßiger Form über die gesamte Bodenfläche des Bodenbrenners verteilt. Bei Verwendung des Bodenbrenners in Kammeröfen, welche bei einer Temperatur oberhalb 900 °C bis 1400 °C betrieben werden, ist es besonders zweckmäßig, wenn jede Reaktionsrohrdurchführung von mindestens 3, vorzugsweise 5 bis 6, Brenngasdüsen umgeben ist. Eine derartige bevorzugte Anordnung folgt aus der Figur 3/4.

In Figur 4/4 ist in schematischer Form ein Kammerofen mit durch den Boden (402) und die Decke der Brennkammer (401) reichenden Reaktionsrohren (412) dargestellt. Seitlich wird der Kammerofen von der Wand (403) begrenzt. Bodenseitig ist ein erfindungsgemäßer Bodenbrenner (400) mit den Zuführungen (436 bzw. 437) für Luft bzw. das Brenngas angeordnet. Unterhalb des Bodenbrenners befindet sich eine Vorrichtung (433) mit dem Zufuhrstutzen (434) zur Versorgung der Reaktionsrohre mit dem umzusetzenden Gas oder Gasgemisch. Oberhalb der Brennkammer ist ein Kühlkopf (432) angeordnet, womit die Reaktionsgase abgeschreckt und über den Stutzen (435) abgezogen werden können. Die Verbrennungsgase des Flammenteppichs (420) strömen parallel zu den Reaktionsrohren durch die Brennkammer und werden durch einen Rekuperator (438) mittels eines durch eine darin angeordnete Kühlschlange strömenden Gases abgekühlt und tritt über einen Stutzen (440) aus. Zweckmäßigerweise wird im Rekuperator die erforderlicher Verbrennungsluft aufgeheizt. Details zur Ausgestaltung der Vorrichtung (433) zur Zuführung der umzusetzenden Gase, der Halterung der Reaktionsrohre sowie des Kühlkopfes (432) sind aus Patent- und Literaturdokumenten betreffend das BMA-Verfahren bekannt. Selbstverständlich können mehrere des in Figur 4/4 dargestellten Kammerofens zu einem Mehrkammerofen zusammengefaßt werden.

Der zuvor beschriebene Kammerofen mit dem erfindungsgemäßen Bodenbrenner läßt sich zur Durchführung endothermer Gasreaktionen, insbesondere zur Herstellung von Cyanwasserstoff nach dem sogenannten BMA-Verfahren, verwenden. Da es sich bei vielen Gasreaktionen um katalytische Reaktionen handelt, sind die Reaktionsrohre, welche vorzugsweise aus einem keramischen Material gefertigt sind, innen mit einer katalytischen Beschichtung belegt. Im Falle der Verwendung eines solchen Kammerofens zur Herstellung von Cyanwasserstoff nach dem BMA-Verfahren sind die Reaktionsrohren mit einem Platinmetall enthaltenden Katalysator belegt.

Der erfindungsgemäße Bodenbrenner weist eine Reihe von Vorteilen auf:
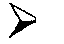 Der Bodenbrenner bewirkt durch seinen Eintrag auf der Unterseite der Ofenkammer, in welcher ein Bündel von Reaktionsrohren aufgehängt ist, zu einem geringen horizontalen Temperaturgradienten. Wie aus dem nachfolgenden Beispiel zu ersehen ist, führt dieser geringe Temperaturgradient im BMA-Verfahren zu einer Steigerung der HCN-Ausbeute um 3 bis 4 %.
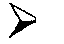 Durch den geringen horizontalen Temperaturgradienten wird auch ein einheitliches Reaktionsverhalten an allen Reaktionsrohrpositionen einer technischen Ofenkammer erreicht. Hierdurch reduziert sich der Analysenaufwand der einzelnen Reaktionsrohre einer Kammer. Im BMA-Verfahren wird die Verrußungsgefahr, wie sie bisher bei seitlicher Brenneranordnung bei brennernahen Reaktionsrohrpositionen auftrat, gemindert, wodurch die Rohrverfügbarkeit steigt.
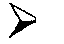 Durch die Verteilung der Brenngas- und Luftmenge auf eine größere Anzahl Brennerdüsen auf der Bodenseite einer Kammer und die gleichmäßige horizontale Energieverteilung werden Temperaturspitzen und damit eine örtlich zu hohe thermische Belastung vermieden. Dadurch reduziert sich die Belastung der Reaktionsrohre gegenüber jener, welche im Stand der Technik bei seitlicher Anordnung des Brenners bei brennernahen Positionen auftrat. Durch die erfindungsgemäße Anordnung der Reaktionsrohre und Brennerdüsen, wobei jedes Reaktionsrohr von es umgebenden 5 bis 6 Brennerdüsen beheizt wird, wird nicht nur eine gleichmäßigere Reaktion in allen Reaktionsrohren erreicht, sondern auch die Keramik der Reaktionsrohre geschont.
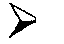 Das Brenngas- und das Verbrennungsluftgehäuse des Bodenbrenners sowie deren Zuleitungen sind voneinander getrennt, so daß es zu keiner Vermischung und somit Entstehung eines zündfähigen Gemischs innerhalb des Bodenbrenners kommt. Bei der bevorzugten Ausführungsform unter Verwendung eines Diffusionsbrenners, wonach Brenngas und Verbrennungsluft nach der Brennerdüse vermischt werden, entsteht kein zündfähiges Brenngas-/Luftgemisch außerhalb der Brennkammer oder in zuführenden Rohrleitungen. Damit ist es möglich, die Verbrennungsluft durch die Verbrennungsgase ausreichend vorzuwärmen, beispielsweise auf/um über 400 °C und somit einen sicheren und wirtschaftlichen Betrieb des Ofens zu gewährleisten.
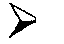 Durch die Anordnung des Bodenbrenners an der Bodenseite einer Brennkammer übernimmt der Bodenbrenner die Abdichtungs-und Isolationsfunktion der bei den bisher eingesetzten Kammeröfen mit seitlich angeordneten Brennern eingesetzten Feuerfestmatten. Durch die Verwendung erfindungsgemäßer Bodenbrenner und damit Wegfall seitlicher Brenner resultiert ein geringerer Platzbedarf und zudem können die Ofenkammern bezüglich ihrer Grundfläche und Geometrie den gewünschten räumlichen Gegebenenheiten und Anlagenkapazität angepaßt werden.
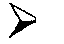 Durch die unter Verwendung des erfindungsgernäßen Bodenbrenners mögliche Erniedrigung der Verbrennungstemperatur wird auch die NOₓ-Belastung reduziert.
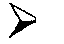 Der Bodenbrenner ist wartungsarm. Aufgrund der Vielzahl der Düsen führt ein Ausfall einzelner Düsen zu keiner nennenswerten Funktionsstörung.
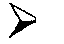 Der Bodenbrenner ist durch eine hohe Flammenstabilität gekennzeichnet und erlaubt die Einstellung eines Heizgas-Luftverhältnisses im Bereich von etwa 1 bis 20.

### Beispiele

In einer Versuchsanlage gemäß Figur 4/4 mit einem erfindungsgemäßen Bodenbrenner wurde das BMA-Verfahren zur Herstellung von Cyanwasserstoff aus Methan und Ammoniak bei einer Richttemperatur im Bereich von 1320 bis 1340 °C, einer NH₃-Mollast von 32 Mol pro Reaktionsrohr und Stunde und einem NH₃/CH₄-Molverhältnis im Bereich von 1,1 und 1,4 durchgeführt. Es wurde festgestellt, daß die auf Ammoniak bezogene Ausbeute an Cyanwasserstoff um 3 bis 4 % höher lag, als jene, wie sie in gleichartigen Kammern, jedoch seitlich angeordneten Flächenbrennern bei gleicher Reaktionstemperatur erhältlich waren. Durch den erfindungsgemäßen Brenner war es zudem möglich, das Molverhältnis NH₃ zu CH₄ abzusenken, ohne daß der Abstand der Volumprozente zwischen Ammoniak und Methan im Reaktionsgas auf die Verrußung fördernde Werte absank. Zudem erwies sich die Standardabweichung des Gehalts (Volum-%) an Ammoniak und Methan im Reaktionsgas geringer als im Falle des Ofens mit seitlich angeordneten Flächenbrennern. Die nachfolgende Tabelle verdeutlicht diesen Unterschied. Trotz des bereits reduzierten Einsatz-Molverhältnisses Ammoniak zu Methan ist der Abstand des Gehalts an Ammoniak im Reaktionsgas von jenem an Methan noch größer als im Vergleichsbeispiel. Ohne Probleme mit einer Verrußung befürchten zu müssen, läßt sich somit das Einsatz-Molverhältnis NH₃CH₄ bei Verwendung eines erfindungsgemäßen Bodenbrenners weiter reduzieren.

**Tabelle**

| | Beispiel | Vergleichsbeispiel |
|---|---|---|
| | Bodenbrenner | Flächenbrenner seitliche Anordnung |
| Temperatur (°C) | 1320 | 1320 |
| NH₃/CH₄ (Molverhältnis) | 1,1 | 1,17 |
| Abstand NH₃/CH₄ im Reaktionsgas (Vol-%) | | |
| Gesamtkammer | 1,02 | 0,50 |
| Mittelwert der Analyse der einzelnen Rohre | 0,98 | 0,54 |
| Standardabweichung (%) | 19 | 33 |

### Bezugszeichen

Die 1. Ziffer der Bezugszeichen in den Figuren entspricht der Nr. der Figur
- 00: Bodenbrenner
- 01: Brennkammer
- 02: Brennkammerboden
- 03: Brennkammerwand
- 04: Ofenträger (oberer)
- 05: Ofenträger (unterer)
- 06: Brennerstein
- 07: Isolierstein
- 08: Luftgehäuse
- 09: Brenngasgehäuse
- 10: Isoliermatte (Dichtungselement)
- 11: Bohrung für Reaktionsrohr
- 12: Reaktionsrohr
- 13: Bohrung für Brenngasdüse
- 14: Brenngasdüse
- 15: Brenngaslanze
- 16: Düsendrallkörper
- 17: Stützhülse
- 18: Öffnung für Gaslanze
- 19: Ringspalt
- 20: Flamme
- 21: Luftgehäusedecke
- 22: Luftgehäuseseitenwand
- 23: Luftgehäuseboden
- 24: Brenngasgehäusedecke
- 25: Brenngasgehäuseboden
- 26: Brenngasgehäuseseitenwand
- 27: Schraube
- 28: Mutter
- 29: Luftzufuhrstutzen
- 30: Brenngaszufuhrstutzen
- 31: Dichtungselement
- 32: Kühlkopf
- 33: Reaktionsgasgehäuse
- 34: Reaktionsgaszufuhr
- 35: Reaktionsgasabfuhr
- 36: Luftzufuhr
- 37: Brenngaszufuhr
- 38: Rekuperator
- 39: Wärmetauscherrohr
- 40: Rauchgasaustritt
- 41: bodenseitige Reaktionsrohrdurchführung (Luftgehäuse)
- 42: deckenseitige Reaktionsrohrdurchführung (Luftgehäuse)
- 43: bodenseitige Brenngaslanzedurchführung
- 44: deckenseitige Brenngaslanzedurchführung
- 45: bodenseitige Reaktionsrohrdurchführung (Brenngasgehäuse)
- 46: deckenseitige Reaktionsrohrdurchführung (Brenngasgehäuse)

## Patentansprüche

1. Bodenbrenner für einen Kammerofen mit mindestens einem, insbesondere einem Bündel von durch den Boden reichenden Reaktionsrohren,
umfassend einen den Kammerboden bildenden Brennerstein (106),
einen darunter angeordneten Isolierstein (107), wobei senkrechte Bohrungen (111 und 113) für die Reaktionsrohre (112) und mindestens eine, insbesondere eine die Zahl der Reaktionsrohre übersteigende Zahl Brenngasdüsen (114) durch den Brenn- und Isolierstein reichen, Brenngasdüsen, welche einen Düsenkörper (116) und eine Brenngaslanze (115) umfassen und wobei zwischen den Brenngaslanzen und den sie umgebenden Stein ein Ringspalt (119) verbleibt,
ein unterhalb des Isoliersteins angeordnetes, mit einer Vorrichtung zur Luftzufuhr ausgestattetes Luftgehäuse (108), durch welches die Reaktionsrohre und Brenngaslanzen reichen und welches deckenseitig mit den Ringspalten in Verbindung steht,
ein unterhalb des Luftgehäuses angeordnetes mit einer Vorrichtung zur Brenngaszufuhr ausgestattetes Brenngasgehäuse (109), durch welches die Reaktionsrohre reichen und welches mit den Brenngaslanzen in Verbindung steht und
ein Dichtungselement (110) zur Abdichtung der durch den Boden des Luftgehäuses und die Decke des Gasgehäuses reichenden Reaktionsrohrdurchführungen.

2. Bodenbrenner nach Anspruch 1,
dadurch gekennzeichnet,
daß das Dichtungselement als zwischen dem Luftgehäuse und Gasgehäuse angeordneten Isoliermatte ausgebildet ist.

3. Bodenbrenner nach Anspruch 1 oder 2,
dadurch gekennzeichnet,
daß der Düsenkörper einen Drallkörper umfaßt und innerhalb der Bohrung im Brennerstein endet.

4. Bodenbrenner nach einem der Ansprüche 1 bis 3,
dadurch gekennzeichnet,
daß die Bohrungen für die Reaktionsrohre im wesentlichen gleichmäßig über die Fläche des Brennersteins verteilt sind und jede dieser Bohrung von mindestens drei Bohrungen für Brenngasdüsen umgeben ist.

5. Kammerofen mit Reaktionsrohren umfassend eine Brennkammer (401) mit durch den Boden und die Decke derselben reichenden, frei dehnbahren Reaktionsrohren (412), einen Brenner (400) mit mehreren Brenngasdüsen und Vorrichtungen zum Zuführen eines Brenngases und Luft, eine Vorrichtung (433) zur Versorgung der Reaktionsrohre mit dem(den) umzusetzenden Gas(en), einen Kühlkopf (432) zum Abkühlen und Abführen der Reaktionsgase und eine Vorrichtung zum Abführen der Verbrennungsgase (438),
dadurch gekennzeichnet,
daß der Brenner als Bodenbrenner gemäß einem der Ansprüche 1 bis 4 ausgebildet ist.

6. Kammerofen nach Anspruch 5,
dadurch gekennzeichnet,
daß die Reaktionsrohre aus keramischem Material bestehen, innen mit einer katalytisch wirksamen Beschichtung belegt sind und jedes Reaktionsrohr im wesentlichen von mindestens drei, insbesondere vier bis sechs Brenngasdüsen umgeben ist.

7. Verwendung des Kammerofens nach Anspruch 5 oder 6 zur Durchführung endothermer Gasreaktionen, insbesondere zur Herstellung von Cyanwasserstoff nach dem sogenannten BMA-Verfahren.
